(19) **Europäisches Patentamt / European Patent Office / Office européen des brevets**

(11) **EP 3 057 000 A1**

(12) # EUROPEAN PATENT APPLICATION
published in accordance with Art. 153(4) EPC

(43) Date of publication:
**17.08.2016 Bulletin 2016/33**

(21) Application number: **13894286.7**

(22) Date of filing: **06.12.2013**

(51) Int Cl.:
**G06F 17/30** (2006.01)

(86) International application number:
**PCT/CN2013/088777**

(87) International publication number:
**WO 2015/043076 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.09.2013 CN 201310456958**

(71) Applicants:
• **Peking University Founder Group Co., Ltd**
  **Beijing 100871 (CN)**
• **Founder Apabi Technology Limited**
  **Beijing 100089 (CN)**
• **Peking University**
  **Beijing 100871 (CN)**

(72) Inventors:
• **YE, Mao**
  **Beijing 100089 (CN)**
• **JIN, Lifeng**
  **Beijing 100089 (CN)**
• **LEI, Chao**
  **Beijing 100089 (CN)**
• **WANG, Yuanlong**
  **Beijing 100089 (CN)**
• **TANG, Zhi**
  **Beijing 100089 (CN)**
• **XU, Jianbo**
  **Beijing 100089 (CN)**

(74) Representative: **Dantz, Jan Henning**
  **Loesenbeck - Specht - Dantz**
  **Patent- und Rechtsanwälte**
  **Am Zwinger 2**
  **33602 Bielefeld (DE)**

(54) **KNOWLEDGE EXTRACTION METHOD AND SYSTEM**

(57)     In the method and system for knowledge extraction of this invention, knowledge extraction is realized through acquiring an initial sentence group including one or more sentences, and then comparing the length of the initial sentence group with an expected length to determine the initial sentence group to be expanded according to the comparison result. Since the sentence groups are formed by consecutive sentences, it may be guaranteed that the sentence groups themselves have good coherence in logic, so that the final sentence groups obtained through expanding the initial sentence groups have good coherence in logic correspondingly. Thus, this invention may override the drawback of lacking logical coherence in extracted knowledge information in the prior art.

S102
acquiring an initial sentence group, the initial sentence group including one or more sentences

S104
expanding the initial sentence group, comparing the length of the initial sentence group with an expected length to determine the initial sentence group to be expanded according to the comparison result

S106
extracting knowledge, in which the sentence groups that are finally obtained after expansion are outputted to realize knowledge extraction

Fig.1

EP 3 057 000 A1

**Description**

TECHNICAL FIELD

This invention relates to a method and system of knowledge extraction, particularly to a method and system of knowledge extraction based on sentence groups, which involves the field of digital data processing technology.

DESCRIPTION OF THE RELATED ART

Knowledge extraction is one of the research focuses commonly concerned in many fields such as natural language processing, semantic Web, machine learning, knowledge engineering, knowledge discovery, knowledge management, text mining, etc. As a newly developed research focus, knowledge extraction means extracting knowledge from text information, i.e., through content parsing and processing performed on documents, extracting knowledge contained in the documents on the basis of items. Knowledge extraction is one kind of knowledge acquisition and is sublimation and deepening of information extraction. Currently, a plenty of knowledge resources are available in the form of digital publication resources, however, knowledge resources that are present in the form of sentence groups are scarce. Sentence groups are speech communication units formed by consecutive sentences having close associations in sense or structure, and are considered as an effective representation form of knowledge. Sentence groups are extracted from articles in books (articles are a traditional knowledge organization form). Through knowledge extraction based on sentence groups, the granularity of document processing may be decreased to the level of sentence groups, so that the traditional knowledge organization and management manner may be changed completely.

In the process of knowledge extraction, the following method is commonly adopted in the prior art: performing knowledge extraction on the basis of individual sentences and then combining individual sentences obtained through extraction for output. This method ignores coherence of consecutive sentences, causing that extracted knowledge information lacks logical coherence, and thus is inconvenient for understanding.

SUMMARY OF THE INVENTION

In order to solve a problem in the prior art of lacking logical coherence in extracted knowledge information and inconvenience for understanding, the present invention provides a knowledge extraction method and system capable of guaranteeing logical coherence in extracted knowledge information.

In order to solve the above problem, the following technical solutions are provided in this invention.

According to an aspect of this invention, a knowledge extraction method is provided, comprising the following steps: acquiring an initial sentence group, the sentence group including one or more sentences; expanding the initial sentence group in which the length of the initial sentence group is compared with an expected length to determine the initial sentence group to be expanded according to the comparison result; extracting knowledge in which the sentence group that is finally obtained after expansion is outputted to realize knowledge extraction.

Optionally, the step of expanding the initial sentence group comprises: setting a weight threshold in which a weight threshold is set for the initial sentence group according to the result of comparing the length of the initial sentence group with the expected length; expanding the sentence group in which weights of sentences to be expanded are compared with the weight threshold, and expanding the initial sentence groups according to the comparison result.

Optionally, the step of acquiring an initial sentence group comprises: dividing text into sentences; forming an initial sentence group by I consecutive sentences, wherein I is an integer greater than or equal to 1. Optionally, I=3.

According to another aspect of this invention, a knowledge extraction system is further provided comprising: an initial sentence group acquisition module for acquiring an initial sentence group, the initial sentence group including one or more sentences; initial sentence group expansion module for comparing the length of the initial sentence group with an expected length to determine an initial sentence group to be expanded according to the comparison result; a knowledge extraction module for outputting sentence groups that are finally obtained after the expansion of the initial sentence group expansion module to realize knowledge extraction.

Optionally, the initial sentence group expansion module comprises: a weight threshold setting unit for setting a weight threshold for the initial sentence group according to the result of comparing the length of the initial sentence group with the expected length; a sentence group expansion unit for, in the expansion of the initial sentence group, comparing weights of sentences to be expanded with the weight threshold and expanding the initial sentence group according to the comparison result.

Optionally, the initial sentence group acquisition module comprises: a sentence dividing unit for dividing text into sentences; an extraction unit for forming an initial sentence group by I consecutive sentences, wherein I is an integer greater than or equal to 1.

Optionally, the sentence dividing unit forms the initial sentence group by 3 consecutive sentences.

According to still another aspect of this invention, there is also provided one or more computer readable medium having stored thereon computer-executable instructions that when executed by a computer perform a knowledge extraction method, the method comprising: acquiring an initial sentence group, the initial sentence group including one or more sentences; expanding the initial sentence group in which the length of the initial sentence group is compared with an expected length to determine an initial sentence group to be expanded according to the comparison result; extracting knowledge in which the sentence groups that are finally obtained after expansion are outputted to realize knowledge extraction.

With the knowledge extraction method and system in this disclosure, knowledge extraction is realized through acquiring initial sentence groups each including one or more sentences, and then comparing lengths of the initial sentence groups with an expected length to determine an initial sentence group to be expanded according to the comparison result. Since the sentence groups are formed by consecutive sentences, it may be guaranteed that the sentence groups themselves have good coherence in logic, so that the final sentence groups obtained through expanding the initial sentence groups have good coherence in logic correspondingly. Thus, this disclosure may override the drawback of lacking logical coherence in extracted knowledge information in the prior art.

Furthermore, according to the knowledge extraction method and system in this disclosure, the final sentence groups are obtained through left expansion and/or right expansion of the initial sentence groups, good coherence in logic may be guaranteed for the extracted sentence groups that are finally obtained, thereby causing no unexpected feeling. Meanwhile, through left expansion and/or right expansion of the initial sentence groups, sentences to be extracted may be prevented from being omitted, resulting in more comprehensive content contained in the extracted knowledge information.

BRIEF DESCRIPTION OF THE DRAWINGS

For a complete understanding of this invention, a description will be given with reference to the accompanying drawings, wherein:

Fig.1 is a block diagram of a knowledge extraction method of this invention;
Fig.2 is a flowchart of performing left expansion on initial sentence groups according to an embodiment of this invention;
Fig.3 is a block diagram of a structure of a knowledge extraction system of this invention;
Fig. 4 is a block diagram of a structure of a knowledge extraction system according to a preferred embodiment of this invention.

1 initial sentence group acquisition module, 2 initial sentence group expansion module, 3 knowledge extraction module, 4 property set module, 11 sentence dividing unit, 12 extraction unit, 21 weight threshold setting unit, 22 sentence group expansion unit, 31 final sentence group deduplicating and outputting unit, 32 final sentence group removing and outputting unit, 33 final sentence group sorting and outputting unit, 211 comparison result determination subunit, 211a redundant value setting device, 212 weight threshold determination subunit, 212a threshold adjustment factor setting device, 212b property weight density acquisition device, 212c weight threshold acquisition device, 221 initial sentence group selection subunit, 222 sentence weight acquisition subunit, 222a first weight acquisition device, 222b second weight acquisition device, 223 comparison subunit, 224 new sentence group acquisition subunit, 225 loop expansion subunit, 226 threshold setting subunit, 227a first counting subunit, 227b second counting subunit, 228a sentence group weight acquisition subunit, 228b sentence group length acquisition subunit, 228c weight density acquisition subunit

DETAILED DESCRIPTION OF THE PREFERRED EMBODIMENT

Embodiment 1

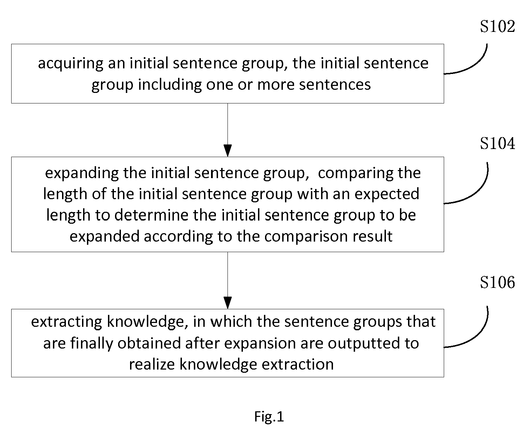

A knowledge extraction method is described in this embodiment, as shown in Fig.1, the method comprises the following steps:

S102: acquiring an initial sentence group, the initial sentence group including one or more sentences;
S104: expanding the initial sentence group in which the length of the initial sentence group is compared with an expected length to determine an initial sentence group to be expanded according to the comparison result;
S106: extracting knowledge in which the sentence group that is finally obtained after expansion is outputted to realize knowledge extraction.

In this embodiment, knowledge extraction is realized through acquiring initial sentence groups each including one or more sentences, and then comparing lengths of the initial sentence groups with an expected length to determine an initial sentence group to be expanded according to the comparison result. Since the sentence groups are formed by consecutive sentences, it may be guaranteed that the sentence groups themselves have good coherence in logic, so that the final sentence groups obtained through expanding the initial sentence groups have good coherence in logic correspondingly. Thus, this disclosure may override the drawback of lacking logical coherence in extracted knowledge information in the prior art.

As a preferred embodiment, in the knowledge extraction method of this embodiment, the step of acquiring an initial sentence group comprises: dividing text into sentences; forming an initial sentence group by I consecutive sentences, wherein I is an integer greater than or equal to 1. As a preferred embodiment, I=3.

In this embodiment, text is divided into sentences to form initial sentence groups by three consecutive sentences. A better output result is obtained in this embodiment when I=3, guaranteeing that each final sentence group extracted includes at least three sentences. In this embodiment, three consecutive sentences are drawn out from text to form the initial sentence groups, so that the initial sentence groups themselves have good logical relationships; further, because the final sentence groups are obtained through expanding the initial sentence groups, the final sentence groups obtained through extraction have good logical relationships and may not lead to an unexpected feeling.

In the knowledge extraction method of this embodiment, the step of expanding the initial sentence group comprises: setting a weight threshold in which a weight threshold is set for the initial sentence group according to the result of comparing the length of the initial sentence group with the expected length; expanding the sentence group in which weights of sentences to be expanded are compared with the weight threshold, and expanding the initial sentence group according to the comparison result.

As another alternative embodiment, in the knowledge extraction method of this embodiment, the step of expanding the initial sentence group may comprise: comparing the length of the initial sentence group and an expected length; if a length of an initial sentence group does not reach the expected length, expanding the initial sentence group; if a length of an initial sentence group reaches or exceeds the expected length, terminating the expansion.

In this embodiment, no matter in which manner the initial sentence groups are expanded, the relationship between lengths of initial sentence groups and an expected length is considered, making that the lengths of finally extracted sentence groups approach the expected length closely.

The expected length in this embodiment is familiar to those skilled in the art. For example, there is a limitation on the length of abstracts of patent descriptions of not exceeding 300 words. In the case of extracting relative sentences from text to form an abstract of a patent application, the expected length is 300 words. If there is not a specific requirement on the expected length, it may be selected based on practical demands.

The expected length, lengths of initial sentence groups and lengths of sentences in this embodiment and subsequent embodiments are all counted in the number of characters.

Embodiment 2

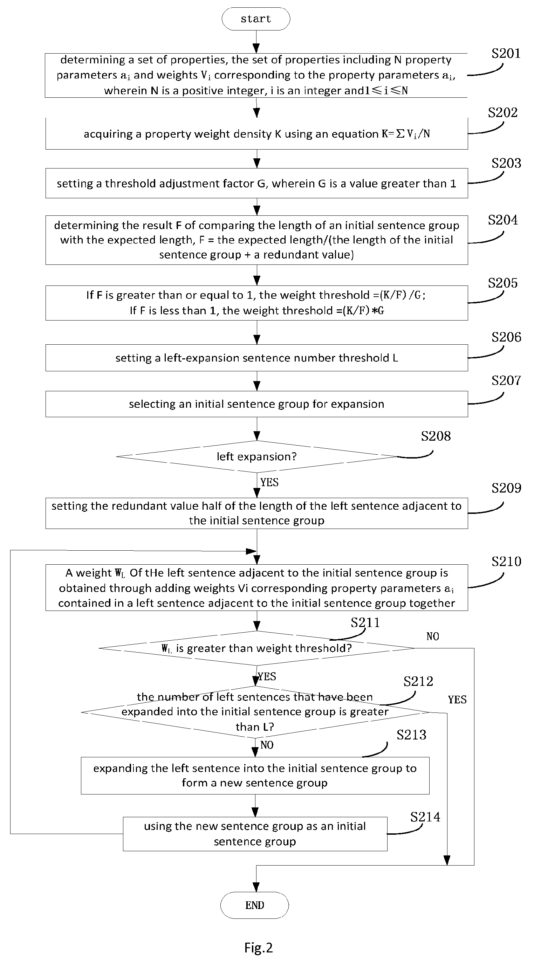

On the basis of embodiment 1, in the knowledge extraction method of this embodiment, as shown in Fig.2, the step of setting a weight threshold comprises:

determining a comparison result F: determining the result F of comparing the length of an initial sentence group with the expected length = the expected length/(the length of the initial sentence group + a redundant value). determining a weight threshold: a weight threshold when F is greater than or equal to 1; a weight threshold when F is less than 1. In an embodiment, in the step of determining a weight threshold: when F is greater than or equal to 1, the weight threshold = (K/F)/G; when F is less than 1, the weight threshold = (K/F)*G. wherein, G is a threshold adjustment factor and G is a value greater than 1; K is a property weight density. Optionally, the threshold adjustment factor G is in a range $5 \leq G \leq 30$. 30.

In this embodiment, according to the result of comparison between lengths of the initial sentence groups and the expected length, a weight threshold is set for the initial sentence groups, wherein the comparison result F= the expected length/(the length of an initial sentence group + a redundant value); the weight threshold is set as a function of the comparison result F, when F is greater than or equal to 1, the weight threshold = (K/F)/G; when F is less than 1, the weight threshold = (K/F)*G. Thus, the less the comparison result F is, i.e., the closer the length of the initial sentence group approaches the expected length or the more the length of the initial sentence group goes beyond the expected length, the larger the weight threshold is, i.e., the weight threshold may be adjusted dynamically according to the result of the comparison between the lengths of the initial sentence groups and the expected length. Compared with the prior art in which the a fixed criteria is adopted, this embodiment provides a criteria that may be adjusted dynamically based on practical situations, so as to guarantee that the extracted knowledge information is more closer to the expected length.

As a preferred embodiment, the threshold adjustment factor G is in a range $5 \leq G \leq 30$. As demonstrated by experiments, the best effect of knowledge extraction may be obtained when the threshold adjustment factor G is set in this range.

As an alternative embodiment, the knowledge extraction method of this embodiment further comprises the following steps:

determining a set of properties, the set of properties including N property parameters $\alpha_i$ and weights $v_i$ corresponding to the property parameters $\alpha_i$, wherein N is a positive integer, i is an integer and $1 \leq i \leq N$.

acquiring a property weight density. A property weight density K is obtained using an equation $K = \sum v_i/N$.

The property name of property parameter $\alpha_i$ is a keyword predetermined according to knowledge information to be extracted and is represented by a character string corresponding to the property name. Determining whether property parameter $\alpha_i$ is contained in a sentence is to determine whether the sentence includes a character string representing property parameter $\alpha_i$. Weight $v_i$ corresponding to property parameter $\alpha_i$ may be determined according to the importance degree of property parameter $\alpha_i$, i.e., the more important the property parameter $\alpha_i$ is, the larger value the corresponding weight $v_i$ is assigned, and vice versa.

In addition to the equation $K = \sum v_i/N$, the property weight density K may also be specified by users according to practical demands.

Embodiment 3

On the basis of embodiment 1 and embodiment 2, in the knowledge extraction method of this embodiment, as shown in Fig.2, the step of sentence group expansion further comprises:

selecting an initial sentence group, in which an initial sentence group is selected for expansion;

obtaining a weight of a left sentence and a weight of a right sentence, according to a property parameter $\alpha_i$ contained in a left sentence and/or a right sentence adjacent to the initial sentence group and a corresponding weight $v_i$, obtaining a weight $W_L$ of the left sentence and/or a weight $W_R$ of the right sentence adjacent to the initial sentence group;

left expanding and/or right expanding the initial sentence group, in which if the weight $W_L$ of the left sentence and/or the weight $W_R$ of the right sentence adjacent to the initial sentence group is greater than or equal to the weight threshold, the left sentence and/or the right sentence is expanded into the initial sentence group to form a new sentence group; otherwise, no expansion is performed on the initial sentence group;

obtaining a final sentence group, in which the new sentence group is used as an initial sentence group and the step of obtaining a weight of a left sentence and a weight of a right sentence and the step of left expanding and/or right expanding the initial sentence groups are repeated until the initial sentence group cannot be expanded anymore, so as to obtain the final sentence group;

loop expansion, in which each initial sentence group is expanded through the step of selecting an initial sentence group to the step of obtaining a final sentence group, so as to obtain all final sentence groups.

In this embodiment, the expansion of the initial sentence group comprises left expansion, right expansion or left-right expansion, in which:

in the case of left expansion of the initial sentence group, it only needs to obtain a weight $W_L$ of the left sentence adjacent to the initial sentence group; if the weight $W_L$ of the left sentence adjacent to the initial sentence group is greater than or equal to the weight threshold, the left sentence is expanded into the initial sentence group to form a new sentence group; otherwise, no expansion is performed on the initial sentence group;

in the case of right expansion of the initial sentence group, it only needs to obtain a weight $W_R$ of the right sentence adjacent to the initial sentence group; if the weight $W_R$ of the right sentence adjacent to the initial sentence group is greater than or equal to the weight threshold, the right sentence is expanded into the initial sentence group to form a new sentence group; otherwise, no expansion is performed on the initial sentence group;

in the case of left and right expansion of the initial sentence group, it is required to obtain a weight $W_L$ of a left sentence and a weight $W_R$ of a right sentence adjacent to the initial sentence group. if the weight $W_L$ of the left sentence adjacent to the initial sentence group is greater than the weight threshold, the left sentence is expanded into the initial sentence group; if the weight $W_R$ of the right sentence adjacent to the initial sentence group is greater than the weight threshold, the right sentence is expanded into the initial sentence group; a new sentence group is obtained through left expansion and right expansion of the initial sentence group; if both the weight $W_L$ of the left sentence adjacent to the initial sentence group and the weight $W_R$ of the right sentence adjacent to the initial sentence group are less than the weight threshold, no expansion is performed on the initial sentence group. Herein, left and right expansion may comprise right expansion after left expansion, or left expansion after right expansion, or alternate left and right expansion.

In the knowledge extraction method of this embodiment, in the step of obtaining a weight of a left sentence and a weight of a right sentence:

the weight $W_L$ is the sum of weights $v_i$ corresponding to all property parameters $\alpha_i$ contained in the left sentence adjacent to the initial sentence group.

the weight $W_R$ is the sum of weights $v_i$ corresponding to all property parameters $\alpha_i$ contained in the right sentence adjacent to the initial sentence group.

After the above determination performed on left and right sentences, for example, it is determined that the left sentence includes property parameters $\alpha_1$ and $\alpha_2$, the weight of the left sentence is $W_L = v_1 + v_2$; it is determined that the right sentence includes property parameters $\alpha_3$ and $\alpha_4$, the weight of the right sentence is $W_R = v_3 + v_4$. Herein, when the same property $\alpha_i$ occurs several times, a corresponding weight $v_i$ will be accumulated one or multiple times. In general, in order to obtain a result meeting users' demands better, the property $\alpha_i$ may be accumulated a number of times that the property $\alpha_i$ occurs.

As an alternative solution, an alternative method of calculating sentence weight is $\sum \beta_i v_i$, wherein $\beta_i v_i$ is a value contributed by property $\alpha_i$ occurred in a sentence, $\beta_i$ is a field feature weight of property $\alpha_i$. The field feature weight of property $\alpha_i$ may be obtained through training using field documents. When $\beta_i$ is 1, it becomes the scheme adopted in this embodiment. This embodiment only provides a method of obtaining a weight $W_L$ of a left sentence and/or a weight $W_R$ of a right sentence adjacent to the initial sentence group. Other methods of calculating sentence weight existed in the prior art may be adopted, so long as the same method is used throughout for the calculations of all sentence weight values.

In the knowledge extraction method of this embodiment, according to the result of the comparison between lengths of initial sentence groups and the expected length, a weight threshold is set for the initial sentence groups. The comparison result F = expected length/(the length of an initial sentence group + a redundant value), and the weight threshold is set as a function of the comparison result F. The less the comparison result F is, i.e., the closer the length of the initial sentence group approaches the expected length or the more the length of the initial sentence group goes beyond the expected length, the larger the weight threshold is; the weight $W_L$ of the left sentence and/or the weight $W_R$ of the right sentence adjacent to the initial sentence group is compared with the weight threshold, only if the weight $W_L$ of the left sentence and/or the weight $W_R$ of the right sentence adjacent to the initial sentence group is greater than or equal to the weight threshold, the left sentence and/or the right sentence is expanded into the initial sentence group to form a new sentence group; otherwise, no expansion is performed on the initial sentence group. Thus, the weight threshold may be adjusted dynamically according to the result of the comparison between the lengths of the initial sentence groups and the expected length. For example, if the length of an initial sentence group is far less than the expected length, the weight threshold will become very small, causing that the weight $W_L$ of the left sentence and the weight $W_R$ of the right sentence are prone to be greater than the weight threshold, thereby the left sentence and/or the right sentence is liable to be expanded into the initial sentence group; otherwise, the weight threshold will become very large, and the left sentence and/or the right sentence may be expanded into the initial sentence group only if it includes many property parameters $\alpha_i$. In this manner, the length of the initial sentence group may be controlled effectively to obtain a final sentence group having a length approaching the expected length.

In the knowledge extraction method of this embodiment, in the step of determining the comparison result F, in the case of left expansion of the initial sentence group, the redundant value is set to half of the length of the left sentence adjacent to the initial sentence group; in the case of right expansion of the initial sentence group, the redundant value is set to half of the length of the right sentence adjacent to the initial sentence group.

In practical applications, in left expansion, the redundant value may be selected as a value that is m times of the length of the left sentence adjacent to the initial sentence group; in right expansion, the redundant value may be selected as a value that is m times of the length of the right sentence adjacent to the initial sentence group; preferably, m is a value less than 1. When m is 0.5, it becomes the scheme provided in this embodiment. With the redundant value of this embodiment, according to statistics, the final sentence group may get close enough to the expected length.

Embodiment 4

On the basis of any of embodiment 1 to embodiment 3, as shown in Fig.2, in the knowledge extraction method of this embodiment, the step of sentence group expansion further comprises:

setting a sentence number threshold for left and/or right expansion, in which the left-expansion sentence number threshold is L and the right-expansion sentence number threshold is R.

In the step of left expanding and/or right expanding the initial sentence group to obtain a final sentence group, when the number of sentences for left expansion of the initial sentence group is greater than the left-expansion sentence number threshold L, no left expansion is performed on the initial sentence group anymore; when the number of sentences for right expansion of the initial sentence group is greater than the right-expansion sentence number threshold R, no right expansion is performed on the initial sentence group anymore.

Fig.2 is merely a flowchart of left expanding an initial sentence group according to an embodiment of this invention. However, the execution sequence of some steps of left expanding an initial sentence group according to this invention is not limited to that shown in Fig.2. The steps of obtaining and setting some parameters, such as determining a set of properties, determining a property weight density, setting a threshold adjustment factor G, determining a result of comparison between lengths of initial sentence groups and an expected length, may be executed before the looping process, or may be executed before the expansion of initial sentence groups during the looping process.

Through limiting the number of sentences for left and/or right expansion of an initial sentence group, left and/or right expansion of the initial sentence group may be further controlled in a reasonable range, making it convenient to check and understand the sentence group finally extracted.

As a preferred embodiment, in the step of setting a sentence number threshold for left and/or right expansion in the knowledge extraction method of this embodiment, in the case of left and right expanding the initial sentence group, the left-expansion sentence number threshold L is set to 6 and the right-expansion sentence number threshold R is set to 6; in the case of only left expanding the initial sentence group, the left-expansion sentence number threshold L is set to 12 and the right-expansion sentence number threshold R is set to 0; in the case of only right expanding the initial sentence group, the left-expansion sentence number threshold L is set to 0 and the right-expansion sentence number threshold R is set to 12.

As demonstrated by experiments, through setting the left-expansion sentence number threshold and right-expansion sentence number threshold to the above values, the best effect may be obtained in terms of not only sentence coherence in the result of knowledge extraction, but also length control of the final sentence group.

Embodiment 5

On the basis of any of embodiment 1 to embodiment 4, the knowledge extraction method of this embodiment further comprises the following steps:

acquiring a final sentence group weight in which a final sentence group weight is obtained according to property parameters $\alpha_i$ contained in the final sentence group and corresponding weights $V_i$; the final sentence group weight is the sum of corresponding weights $V_i$ of all property parameters $\alpha_i$ contained in each sentence in the final sentence group.

acquiring a final sentence group weight density in which a final sentence group weight density K' = the final sentence group weight/ the length of the final sentence group according to the final sentence group weight.

Note that, in the calculation of the final sentence group weight density K', it is also possible to divide final sentence group weight by the number of sentences in the final sentence group, so long as the same criterion is adopted for each final sentence group in the calculation of the final sentence group weight density K'.

From the above determinations, for example, it is determined that a final sentence group includes property parameters $\alpha_1$, $\alpha_3$, $\alpha_5$, through adding weights $V_1$, $V_3$, $V_5$ together, a weight = $V_1 + V_3 + V_5$ is obtained for final sentence group; if the length of the final sentence group is 300 characters, the final sentence group weight density K' =$(V_1 + V_3 + V_5)/300$. If one sentence or different sentences in the final sentence group includes more than one property parameters $\alpha_i$, its corresponding weight may be added once or several times. In general, for a better result meeting the demand of users, parameters $\alpha_i$ may be added a number of times that its corresponding weight $V_i$ occurs.

Alternatively, an alternative scheme of sentence group weight calculation is $\sum \beta_i v_i$, wherein $\beta_i v_i$ is a value contributed by property $\alpha_i$ present in sentences in the sentence group, $\beta_i$ is a field feature weight of property $\alpha_i$. The field feature weight of property $\alpha_i$ may be obtained through training using field documents. When all $\beta_i$ are 1, it becomes the scheme used in the present embodiment. This embodiment only provides a method of obtaining the final sentence group weight. Other methods of calculating sentence weight existed in the prior art may be adopted, so long as the same method is used to calculate weights for all sentences in the sentence group.

According to the knowledge extraction method of this embodiment, the step of extracting knowledge further comprises: deduplicating and outputting final sentence groups in which final sentence groups are deduplicated and then outputted.

According to the knowledge extraction method of this embodiment, the step of extracting knowledge further comprises: removing and outputting final sentence groups, in which a minimum length is set for final sentence groups and those final sentence groups having a length less than the minimum length are removed.

According to the knowledge extraction method of this embodiment, the step of extracting knowledge further comprises: sorting and outputting final sentence groups, in which final sentence groups are sorted and then outputted according to the weight density K' of each final sentence group.

According to the knowledge extraction method of this embodiment, through deduplicating all final sentence groups, the output of duplicate knowledge information is avoided so that a waste of time due to reading duplicate contents may be prevented; through setting a minimum length for final sentence groups and removing those final sentence groups having a length less than the minimum length, more knowledge information is contained in each final sentence group that is outputted, thereby satisfying the requirement of consulting by users; through sorting and outputting final sentence groups according to the weight density K' of each final sentence group, users may selectively read final sentence groups that are extracted. For example, according to weight densities K', final sentence groups are sorted in descending order and then outputted. Users only need to read the first few final sentence groups to obtain desired knowledge information, so that time for querying by users may be reduced.

A particular example of knowledge extraction is further provided in this embodiment, with the following text:

Property Set T:

| | | |
|---|---|---|
| 0.04502143878037160 | 0.02501191043353970 | 0.02096236303001420 |
| 0.00595521676989042 | 0.01310147689375890 | 0.01214864221057640 |
| 0.01262505955216770 | 0.02191519771319670 | 0.01643639828489750 |
| 0.01429252024773700 | 0.0140543115769414 0 | 0.01119580752739390 |
| 0.00714626012386850 | 0.01071939018580270 | 0.00976655550262029 |
| 0.01024297284421150 | 0.01905669366364930 | 0.00976655550262029 |
| 0.02763220581229150 | 0.02215340638399230 | 0.00595521676989042 |
| 0.02382086707956160 | 0.00643163411148165 | 0.01453072891853260 |
| 0.11505478799428300 | 0.00643163411148165 | 0.06955693187232010 |
| 0.0069080514530728 9 | 0.00643163411148165 | 0.02215340638399230 |
| 0.0102429728442115 0 | 0.01405431157694140 | 0.00714626012386850 |
| 0.02739399714149590 | 0.01214864221057640 | 0.00666984278227727 |
| 0.00643163411148165 | 0.01024297284421150 | 0.01357789423535010 |
| 0.00666984278227727 | 0.00666984278227727 | 0.00881372081943782 |
| 0.00595521676989042 | 0.00643163411148165 | 0.00786088613625536 |
| 0.01119580752739390 | 0.00809909480705097 | 0.00690805145307289 |
| 0.00762267746545974 | 0.01572177227251070 | 0.02525011910433540 |
| 0.01191043353978080 | 0.00714626012386850 | 0.01214864221057640 |
| 0.00619342544068604 | 0.00690805145307289 | 0.00952834683182467 |
| 0.00643163411148165 | 0.00619342544068604 | 0.00762267746545974 |
| 0.02000952834683180 | 0.00666984278227727 | 0.00762267746545974 |
| 0.01310147689375890 | 0.02286803239637920 | 0.00714626012386850 |
| 0.01048118151500710 | 0.00643163411148165 | |

There are totally 68 properties in the above set of properties. The sum of weights corresponding to those properties is 1, thus the property weight density K=1/68=0.1470588.

The above text is segmented based on punctuations representing a complete sentence, such as periods, question marks and exclamations, and total 40 sentences are obtained after the segmentation. For the simplicity of description below, a label is provided for each sentence. In this embodiment, these 40 sentences are labeled as J1 to J40. These labels are provided for the purpose of facilitating the understanding of this technical solution. In the operation of a practical system, these labels are not actually present in the text.

Initial sentence groups are formed by any three consecutive sentences, and the initial sentence groups obtained in such a manner are shown in a table below.

| J1-J3 | J2-J4 | J3-J5 | J4-J6 | J5-J7 |
|-------|-------|-------|-------|-------|
| J6-J8 | J7-J9 | J8-J10 | J9-J11 | J10-J12 |
| J11-J13 | J12-J14 | J13-J15 | ...... | J38-J40 |

After the above initial sentence groups are obtained, expansion is performed for each initial sentence group. Below, an initial sentence group of three sentences J5-J7 is taken as an example to described how to expand sentence groups in the process of knowledge extraction.

In this process of sentence group expansion, the expected sentence group length is set to 300. In left expansion of the sentence group, the redundant value is set to half of a left adjacent sentence and L=6; in right expansion of the sentence group, the redundant value is set to half of a right adjacent sentence and R=6. In both left expansion and right expansion of the sentence group, a description of left expansion before right expansion will be given. Alternatively, right expansion before left expansion is also possible, or left expansion and right expansion may be performed alternately.

Parameters of the sentence group and a left sentence adjacent to the sentence group are obtained as follows.

The length of the sentence group of J5-J7: 155, which is counted in characters that are contained in the sentence group (excluding spaces), and this criterion is used throughout in this embodiment for counting characters. A left sentence adjacent to the sentence group is J4 and the length of J4 is 23, including properties. Thereby, the weight of J4 is the sum of a weight 0.045021438780371605 and a weight 0.115054787994283, which is 0.160076226774654605.

The weight threshold is obtained as follows:

set a threshold adjustment factor G to 20;

according to the length of the initial sentence group and the expected length, F=300/(155+23/2)=1.801 is obtained;

because F>1, the weight threshold is selected as (K/F)/G=0.004069142;

because the weight of J4 is larger than the weight threshold and the number of sentences that have been left expanded is less than 6, J4 may be expanded into the sentence group to form a new sentence group J4-J7.

Left expansion continues while taking the new sentence group J4-J7 as an initial sentence group. The length of the new sentence group is 155+23=178; a left sentence adjacent to the initial sentence group is J3 and its length is 41, which includes properties. Thereby, the weight of the initial sentence group is the sum of weights corresponding to these two properties:

$$0.01643639828489757+0.115054787994283=0.13149118627918057;$$

$$F=300/(178+41/2)=1.51133501;$$

Because F>1, the weight threshold is selected as (K/F)/G=0.0048774502;

Because the weight of J3 is larger than the weight threshold and the number of sentences that have been left expanded is less than 6, J3 may be expanded into the sentence group to form a new sentence group J3-J7.

Similarly, through the above steps, determinations are sequentially performed on J2 and J1, in similar steps, which will not be described in detail. After these determinations, both J2 and J1 are determined as meeting the criterion of being expanded into the sentence group. However, because J1 is the first sentence at the left side, left expansion of the sentence group is automatically terminated upon J1 has been left expanded, and a new initial sentence group J1-J7 is obtained after left expansion.

Right expansion is performed on the initial sentence group J1-J7. The length of the initial sentence group is: 267 and a right sentence adjacent to the initial sentence group is J8. The length of J8 is 64 and it includes properties, wherein appears twice, thereby the weight of J8 is the sum of a weight, a weight and a weight multiplied by 2 as follows:

$$0.0276322058122915 0+0.11505478799428300+0.06955693187232010*2=0.28180$$
$$08575512147.$$

$$F=300/（267+64/2）=1.0033444816$$

Because F>1, a weight threshold (K/F)/G=0.0073284302 is selected.

Because the weight of J8 is greater than the weight threshold and the number of sentences that have been right expanded is less than 6, J8 is expanded in the initial sentence group to form a new sentence group J1-J8.

Right expansion continues while taking the sentence group J1-J8 as a new initial sentence group.

The length of the initial sentence group is 331 and a right sentence adjacent to the initial sentence group is J9. The length of J9 is 38 and it includes properties. Thereby, its weight is calculated as follows:

$$0.11505478799428300+0.02096236303001420=0.1360171510242972.$$

$$F=300/(329+38/2)=0.857142857$$

$$F<1, \text{ a weight threshold } (K/F)*G=3.431372 \text{ is selected.}$$

Although the number of sentences that have been right expanded is less than 6, since the weight of J9 is less than the weight threshold, J9 cannot be expanded into the sentence group and sentence group expansion terminates. Thus, if the length of the sentence group is greater than the expected length, the weight threshold will become very large, so that it is difficult for sentences having a moderate weight to be expanded into the sentence group.

In the similar method, expansion is performed based on other initial sentence groups. For those skilled in the art, all initial sentence groups in a whole document may be expanded according to the process described above, which will not be further described herein.

After all final sentence groups are obtained, duplicate sentence groups are removed and sentence groups are sorted according to their weight densities. Weight density K'= the weight of a final sentence group/ the length of the final sentence group, the length of the final sentence group being the number of characters contained in the final sentence group, the weight of the final sentence group being the sum of weights of various sentences in the final sentence group. Wherein, the weight of each sentence is calculated in the method above, i.e., through adding weights of all properties appeared in the sentence together.

With respect to the above input text, 20 final sentence groups are obtained, which are sorted by weight densities and outputted as follows:

J1-J8; J3-J9; J6-J10; J7-J11; J2-J8; J7-J12; J8-J13; J22-J26; J26-J30; J15-J19; J14-J18; J22-J27; J15-J20; J29-J34; J34-J40; J13-J17; J33-J40; J16-J22; J12-J17; J17-J22.

Embodiment 6

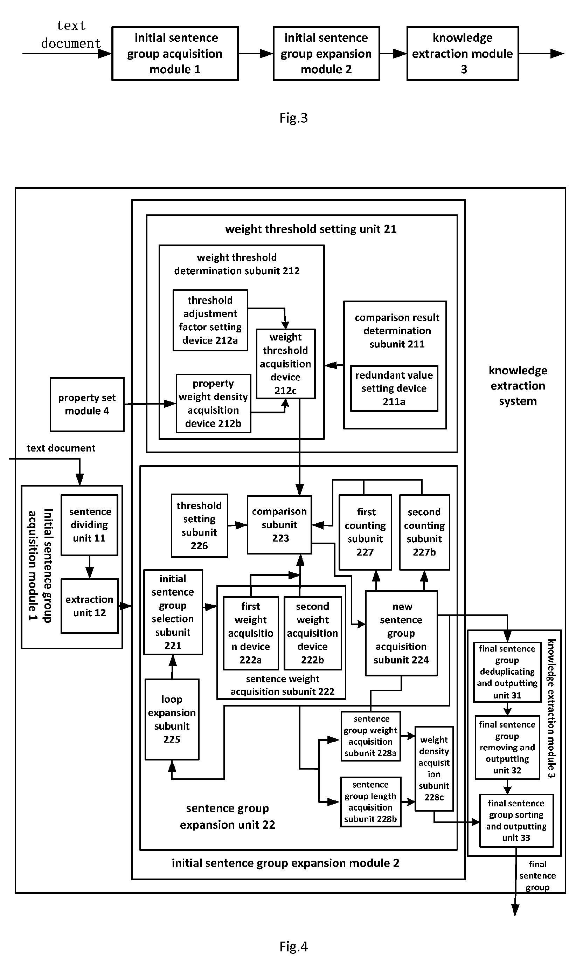

This embodiment provides a knowledge extraction system, as shown in Fig.3, including:

an initial sentence group acquisition module 1 for acquiring initial sentence groups, the sentence group including one or more sentences;
an initial sentence group expansion module 2 for comparing lengths of the initial sentence groups obtained by the initial sentence group acquisition module 1 with an expected length to determine initial sentence groups to be expanded according to the comparison result;
a knowledge extraction module 3 for outputting final sentence groups that are finally obtained by the initial sentence group expansion module 2 to realize knowledge extraction.

In this embodiment, knowledge extraction is realized through acquiring initial sentence groups each including one or more sentences by the initial sentence group acquisition module 1, and then comparing lengths of the initial sentence groups with an expected length by the initial sentence group expansion module 2 to determine initial sentence groups to be expanded according to the comparison result. Since the sentence groups are formed by consecutive sentences, it may be guaranteed that the sentence groups themselves have good coherence in logic, so that the final sentence groups obtained through expanding the initial sentence groups have good coherence in logic correspondingly.

Thus, this disclosure may override the drawback of lacking logical coherence in extracted knowledge information in the prior art.

As a preferred embodiment, in the knowledge extraction method of this embodiment, the step of acquiring initial sentence groups comprises: dividing text into sentences; forming initial sentence groups by I consecutive sentences, wherein I is an integer greater than or equal to 1. As a preferred embodiment, I=3.

In this embodiment, in the knowledge extraction system of this embodiment, as shown in Fig.4, the initial sentence group acquisition module 1 comprises: a sentence dividing unit 11 for dividing a document into sentences; an extraction unit 12 for constructing initial sentence groups with I consecutive sentences throughout in the document, wherein I is an integer larger than or equal to 1. As a preferred embodiment, the extraction unit 12 constructs initial sentence groups with 3 consecutive sentences throughout in the document.

In this embodiment, the text document is divided into sentences by the sentence dividing unit 11 to form initial sentence groups of three consecutive sentences. A better output result is obtained in this embodiment when I=3, guaranteeing that each final sentence group extracted includes at least three sentences. In this embodiment, three consecutive sentences are drawn out from text to form the initial sentence groups, so that the initial sentence groups themselves have good logical relationships; further, because the final sentence groups are obtained through expanding the initial sentence groups, the final sentence groups obtained through extraction have good logical relationships and may not lead to an unexpected feeling.

In the knowledge extraction system of this embodiment, the initial sentence group expansion module 2 comprises a weight threshold setting unit 21 for setting a weight threshold for initial sentence groups according to the result of comparing lengths of the initial sentence groups with the expected length; a sentence group expansion unit 22 for, in expansion of the initial sentence groups, comparing weights of sentences to be expanded with the weight threshold, and expanding the initial sentence groups according to the comparison result.

In this embodiment, the relationship between lengths of initial sentence groups and an expected length is considered, making that the lengths of extracted final sentence groups approach the expected length closely.

The expected length in this embodiment is familiar to those skilled in the art. For example, there is a limitation on the length of abstracts of patent descriptions of not exceeding 300 words. In the case of extracting relative sentences from text to form an abstract of a patent application, the expected length is 300 words. If there is not a specific requirement on the expected length, it may be selected based on practical demands.

The expected length, lengths of initial sentence groups and lengths of sentences in this embodiment and subsequent embodiments are all counted in the number of characters.

Embodiment 7

On the basis of embodiment 6, in the knowledge extraction system of this embodiment, as shown in Fig.4, the weight threshold setting unit 21 comprises a comparison result determination subunit 211 for determining the result F of comparing the length of an initial sentence group with the expected length: F = the expected length/(the length of the initial sentence group + a redundant value); a weight threshold determination subunit 212 for determining a weight threshold: a weight threshold when F is greater than or equal to 1, the weight threshold being less than a weight threshold when F is less than 1.

In the knowledge extraction system of this embodiment, the weight threshold determination subunit 212 comprises a threshold adjustment factor setting device 212a for setting and outputting a threshold adjustment factor G, wherein G is a value greater than 1; a property weight density acquisition device 212b for obtaining and outputting a property weight density K; a weight threshold acquisition device 212c for obtaining and outputting a weight threshold according to outputs of the threshold adjustment factor setting device 212a, the property weight density acquisition device 212b and the comparison result determination unit 211; when F is greater than or equal to 1, the weight threshold = (K/F)/G; when F is less than 1, the weight threshold = (K/F)*G, wherein, G is a threshold adjustment factor and G is a value greater than 1; K is a property weight density.

In this embodiment, the weight threshold setting unit 21 set a weight threshold according to the result of comparison between lengths of initial sentence groups and an expected length; the comparison result determination subunit 211 determines a comparison result F= the expected length/(the length of an initial sentence group + a redundant value); the weight threshold acquisition device 212c determines a weight threshold = (K/F)/G when F is greater than or equal to 1, and a weight threshold = (K/F)*G when F is less than 1. Thus, the less the comparison result F is, i.e., the closer the length of the initial sentence group approaches the expected length or the more the length of the initial sentence group goes beyond the expected length, the larger the weight threshold is, i.e., the weight threshold may be adjusted dynamically according to the result of the comparison between the lengths of the initial sentence groups and the expected length. Compared with the prior art in which the a fixed criteria is adopted, this embodiment provides a criteria that may be adjusted dynamically based on practical situations, so as to guarantee that the extracted knowledge information is more closer to the expected length.

As a preferred embodiment, in the knowledge extraction system of this embodiment, the threshold adjustment factor setting device 212a sets the threshold adjustment factor G in a range $5 \leq G \leq 30$.

As demonstrated by experiments, the best effect of knowledge extraction may be obtained when the threshold adjustment factor G is set in this range.

As an alternative embodiment, the knowledge extraction system of this embodiment further comprises:

a property set module 4 for storing a set of properties including N property parameters $\alpha_i$ and weights $v_i$ corresponding to the property parameters $\alpha_i$, wherein N is a positive integer, i is an integer and $1 \leq i \leq N$;

the property weight density acquisition device 212b obtains a property weight density K using an equation $K = \sum v_i/N$.

The property name of property parameter $\alpha_i$ is a keyword predetermined according to knowledge information to be extracted and is represented by a character string corresponding to the property name. Determining whether property parameter $\alpha_i$ is contained in a sentence is to determine whether the sentence includes a character string representing property parameter $\alpha_i$. Weight $v_i$ corresponding to property parameter $\alpha_i$ may be determined according to the importance degree of property parameter $\alpha_i$, i.e., the more important the property parameter $\alpha_i$ is, the larger value the corresponding weight $v_i$ is assigned, and vice versa.

In addition to the equation $K = \sum v_i/N$, the property weight density K may also be specified by users according to practical demands.

Embodiment 8

On the basis of embodiment 6 or embodiment 7, in the knowledge extraction system of this embodiment, as shown in Fig.4, the sentence group expansion unit 22 further comprises:

an initial sentence group selection subunit 221 for selecting an initial sentence group for expansion from the initial sentence group acquisition module 1; a sentence weight acquisition subunit 222 for obtaining a weight $W_L$ of the left sentence and/or a weight $W_R$ of the right sentence adjacent to the initial sentence group according to property parameters $\alpha_i$ contained in a left sentence and/or a right sentence adjacent to the initial sentence group and corresponding weights $v_i$;

a comparison subunit 223 for comparing the weight $W_L$ of the left sentence and/or the weight $W_R$ of the right sentence adjacent to the initial sentence group with the weight threshold;

a new sentence group acquisition subunit 224 for, if the weight $W_L$ of the left sentence and/or the weight $W_R$ of the right sentence adjacent to the initial sentence group is greater than or equal to the weight threshold, expanding the left sentence and/or the right sentence into the initial sentence group to form a new sentence group and outputting it to the sentence weight acquisition subunit 222 as an initial sentence group, until no expansion is performed on the initial sentence group anymore, so as to obtain a final sentence group, the final sentence group being outputted to the knowledge extraction module 3; a loop expansion subunit 225 for, after the new sentence group acquisition subunit 224 obtains a final sentence group, controlling the initial sentence group selection subunit 221 to select another initial sentence group for expansion from the initial sentence group acquisition module 1.

In this embodiment, in the case of only left expansion of the initial sentence group, if the weight $W_L$ of the left sentence adjacent to the initial sentence group is greater than or equal to the weight threshold, the new sentence group acquisition subunit 224 expands the left sentence into the initial sentence group to form a new sentence group and outputs it to the sentence weight acquisition subunit 222 as an initial sentence group, until no expansion is performed on the initial sentence group anymore, so as to obtain a final sentence group, the final sentence group being outputted to the knowledge extraction module 3.

In the case of only right expansion of the initial sentence group, if the weight $W_R$ of the right sentence adjacent to the initial sentence group is greater than or equal to the weight threshold, the new sentence group acquisition subunit 224 expands the right sentence into the initial sentence group to form a new sentence group and outputs it to the sentence weight acquisition subunit 222 as an initial sentence group, until no expansion is performed on the initial sentence group anymore, so as to obtain a final sentence group, the final sentence group being outputted to the knowledge extraction module 3.

In the case of both left and right expansion of the initial sentence group, if the weight $W_L$ of the left sentence adjacent to the initial sentence group and the weight $W_R$ of the right sentence adjacent to the initial sentence group are greater than the weight threshold, the new sentence group acquisition subunit 224 expands the left and right sentences into the initial sentence group to form a new sentence group and outputs it to the sentence weight acquisition subunit 222 as an initial sentence group, until no expansion is performed on the initial sentence group anymore, so as to obtain a final sentence group, the final sentence group being outputted to the knowledge extraction module 3.

In the knowledge extraction system of this embodiment, the sentence weight acquisition subunit 222 comprises: a first weight acquisition device 222a for adding weights $v_i$ corresponding to all property parameters $\alpha_i$ contained in the left sentence adjacent to the initial sentence group together to obtain a weight $W_L$ of the left sentence; a second weight acquisition device 222b for adding weights $v_i$ corresponding to all property parameters $\alpha_i$ contained in the right sentence adjacent to the initial sentence group together to obtain a weight $W_R$ of the right sentence; the above determination is performed on left and right sentences, for example, if it is determined that the left sentence includes property parameters $\alpha_1$ and $\alpha_2$, the weight of the left sentence is $W_L = v_1 + v_2$; if it is determined that the right sentence includes property parameters $\alpha_3$ and $\alpha_4$, the weight of the right sentence is $W_R = v_3 + v_4$. Herein, when the same property $\alpha_i$ occurs several times, a corresponding weight $v_i$ will be accumulated one or multiple times. In general, in order to obtain a result meeting users' demands better, the property $\alpha_i$ may be accumulated a number of times that the property $\alpha_i$ occurs.

As an alternative solution, an alternative method of calculating sentence weight is $\sum \beta_i v_i$, wherein $\beta_i v_i$ is a value contributed by property $\alpha_i$ occurred in a sentence, $\beta_i$ is a field feature weight of property $\alpha_i$. The field feature weight of property $\alpha_i$ may be obtained through training using field documents. When $\beta_i$ is 1, it becomes the scheme adopted in this embodiment- This embodiment only provides a method of obtaining a weight $W_L$ of a left sentence and/or a weight $W_R$ of a right sentence adjacent to the initial sentence group. Other methods of calculating sentence weight existed in the prior art may be adopted, so long as the same method is used throughout for the calculations of all sentence weight values.

In the knowledge extraction system of this embodiment, according to the result of the comparison between lengths of initial sentence groups and the expected length, a weight threshold is set for the initial sentence groups. The comparison result F = expected length/(the length of an initial sentence group + a redundant value), and the weight threshold is set as a function of the comparison result F. The less the comparison result F is, i.e., the closer the length of the initial sentence group approaches the expected length or the more the length of the initial sentence group goes beyond the expected length, the larger the weight threshold is; the weight $W_L$ of the left sentence and/or the weight $W_R$ of the right sentence adjacent to the initial sentence group is compared with the weight threshold, only if the weight $W_L$ of the left sentence and/or the weight $W_R$ of the right sentence adjacent to the initial sentence group is greater than or equal to the weight threshold, the left sentence and/or the right sentence is expanded into the initial sentence group to form a new sentence group; otherwise, no expansion is performed on the initial sentence group. Thus, the weight threshold may be adjusted dynamically according to the result of the comparison between the lengths of the initial sentence groups and the expected length. For example, if the length of an initial sentence group is far less than the expected length, the weight threshold will become very small, causing that the weight $W_L$ of the left sentence and the weight $W_R$ of the right sentence are prone to be greater than the weight threshold, thereby the left sentence and/or the right sentence is liable to be expanded into the initial sentence group; otherwise, the weight threshold will become very large, and the left sentence and/or the right sentence may be expanded into the initial sentence group only if it includes many property parameters $\alpha_i$. In this manner, the length of the initial sentence group may be controlled effectively to obtain a final sentence group having a length approaching the expected length.

In the knowledge extraction system of this embodiment, the comparison result determination unit 211 comprises: a redundant value setting device 211a for setting a redundant value, wherein in the case of left expansion of the initial sentence group, the redundant value is set to half of the length of the left sentence adjacent to the initial sentence group; in the case of right expansion of the initial sentence group, the redundant value is set to half of the length of the right sentence adjacent to the initial sentence group.

In practical applications, in left expansion, the redundant value may be selected as a value that is m times of the length of the left sentence adjacent to the initial sentence group; in right expansion, the redundant value may be selected as a value that is m times of the length of the right sentence adjacent to the initial sentence group; preferably, m is a value less than 1. When m is 0.5, it becomes the scheme provided in this embodiment. With the redundant value of this embodiment, according to statistics, the final sentence group may get close enough to the expected length.

Embodiment 9

On the basis of any of embodiment 6 to embodiment 8, as shown in Fig.4, in the knowledge extraction system of this embodiment, the sentence group expansion unit 22 further comprises:

> a threshold setting subunit 226 for setting a left-expansion sentence number threshold L for the initial sentence group and/or a right-expansion sentence number threshold R for the initial sentence group;
> a first counting subunit 227a for counting and outputting a number of sentences that have been left expanded into initial sentence group;
> a second counting subunit 227b for counting and outputting a number of sentences that have been right expanded into initial sentence group;
> the comparison subunit 223 is further used for comparing the number of sentences that have been left expanded into initial sentence group with the left-expansion sentence number threshold L, and comparing the number of sentences that have been right expanded into initial sentence group with the right-expansion sentence number threshold R;

the new sentence group acquisition subunit 224 is further used for, if the number of sentences that have been left expanded into initial sentence group is less than or equal to L and/or the number of sentences that have been right expanded into initial sentence group is less than or equal to R, and if the weight $W_L$ of the left sentence and/or the weight $W_R$ of the right sentence adjacent to the initial sentence group are greater than or equal to the weight threshold, expanding the left sentence and/or the right sentence to the initial sentence group to form a new sentence group and outputting it to the sentence weight acquisition subunit 222 as an initial sentence group, until no expansion is performed on the initial sentence group anymore, so as to obtain a final sentence group, the final sentence group being outputted to the knowledge extraction module 3.

Through limiting the number of sentences for left and/or right expansion of an initial sentence group, left and/or right expansion of the initial sentence group may be further controlled in a reasonable range, making it convenient to check and understand the sentence group finally extracted.

As a preferred embodiment, in the knowledge extraction system of this embodiment, in the case of both left and right expanding the initial sentence group, the left-expansion sentence number threshold L is set to 6 and the right-expansion sentence number threshold R is set to 6; in the case of only left expanding the initial sentence group, the left-expansion sentence number threshold L is set to 12 and the right-expansion sentence number threshold R is set to 0; in the case of only right expanding the initial sentence group, the left-expansion sentence number threshold L is set to 0 and the right-expansion sentence number threshold R is set to 12.

As demonstrated by experiments, through setting the left-expansion sentence number threshold and right-expansion sentence number threshold to the above values, the best effect may be obtained in terms of not only sentence coherence in the result of knowledge extraction, but also length control of the final sentence group.

Embodiment 10

On the basis of any of embodiment 6 to embodiment 9, in the knowledge extraction system of this embodiment, as shown in Fig.4, the sentence group expansion unit 22 further comprises:

a sentence group weight acquisition subunit 228a for acquiring a final sentence group weight according to property parameters $\alpha_i$ contained in the final sentence group and corresponding weights $V_i$, the final sentence group weight being the sum of corresponding weights $V_i$ of all property parameters $\alpha_i$ contained in each sentence in the final sentence group;

a sentence group length acquisition subunit 228b for obtaining a length of the final sentence group;

a weight density acquisition subunit 228c for acquiring a final sentence group weight density according to the final sentence group weight, in which the final sentence group weight density K' = the final sentence group weight/ the length of the final sentence group.

Note that, in the calculation of the final sentence group weight density K', it is also possible to divide final sentence group weight by the number of sentences in the final sentence group, so long as the same criterion is adopted for each final sentence group in the calculation of the final sentence group weight density K'.

From the above determinations, for example, it is determined that a final sentence group includes property parameters $\alpha_1$, $\alpha_3$, $\alpha_5$, through adding weights $V_1$ $V_3$, $V_5$ together, a weight = $V_1 + V_3 + V_5$ is obtained for final sentence Vgroup; if the length of the final sentence group is 300 characters, the final sentence group weight density K' =$(V_1 + V_3 + V_5)$/300. If one sentence or different sentences in the final sentence group includes more than one property parameters $\alpha_i$, its corresponding weight may be added once or several times. In general, for a better result meeting the demand of users, parameters $\alpha_i$ may be added a number of times that its corresponding weight $V_i$ occurs.

Alternatively, an alternative scheme of sentence group weight calculation is $\sum \beta_i v_i$, wherein $\beta_i v_i$ is a value contributed by property $\alpha_i$ present in sentences in the sentence group, $\beta_i$ is a field feature weight of property $\alpha_i$. The field feature weight of property $a_i$ may be obtained through training using field documents. When all $\beta_i$ are 1, it becomes the scheme used in the present embodiment. This embodiment only provides a method of obtaining the final sentence group weight. Other methods of calculating sentence weight existed in the prior art may be adopted, so long as the same method is used to calculate weights for all sentences in the sentence group.

In the knowledge extraction system of this embodiment, the knowledge extraction module 3 comprises:

a final sentence group deduplicating and outputting unit 31 for deduplicating the final sentence groups and then outputting the final sentence groups.

In the knowledge extraction system of this embodiment, the knowledge extraction module 3 further comprises:

a final sentence group removing and outputting unit 32 for setting a minimum length for the final sentence groups and outputting the final sentence groups after removing those final sentence groups having a length less than the minimum length.

In the knowledge extraction system of this embodiment, the knowledge extraction module 3 further comprises:

a final sentence group sorting and outputting unit 33 for sorting and outputting final sentence groups, in which final sentence groups are sorted and then outputted according to the weight density K' of each final sentence group.

In the knowledge extraction system of this embodiment, through deduplicating all final sentence groups, the output of duplicate knowledge information is avoided by reduplicating all of the obtained final sentence groups by the final sentence group deduplicating and outputting unit 31, so that a waste of time due to reading duplicate contents may be prevented; through setting a minimum length for final sentence groups and removing those final sentence groups having a length less than the minimum length by the final sentence group removing and outputting unit 32, more knowledge information is contained in each final sentence group that is outputted, thereby satisfying the requirement of consulting by users; through sorting and outputting final sentence groups according to the weight density K' of each final sentence group by the final sentence group sorting and outputting unit 33, users may selectively read final sentence groups that are extracted. For example, according to weight densities K', final sentence groups are sorted in descending order and then outputted. Users only need to read the first few final sentence groups to obtain desired knowledge information, so that time for querying by users may be reduced.

This disclosure also provides one or more computer readable mediums having stored thereon computer-executable instructions that when executed by a computer perform a knowledge extraction method, comprising: acquiring initial sentence groups, the sentence group including one or more sentences; expanding the initial sentence groups in which lengths of the initial sentence groups are compared with an expected length to determine an initial sentence group to be expanded according to the comparison result; extracting knowledge in which the sentence groups that are finally obtained after expansion are outputted to realize knowledge extraction.

Those skilled in the art should understand that the embodiments of this application can be provided as method, system or products of computer programs. Therefore, this application can use the forms of entirely hardware embodiment, entirely software embodiment, or embodiment combining software and hardware. Moreover, this application can use the form of the product of computer programs to be carried out on one or multiple storage media (including but not limit to disk memory, CD-ROM, optical memory etc.) comprising programming codes that can be executed by computers.

This application is described with reference to the method, equipment (system) and the flow charts and/or block diagrams of computer program products according to the embodiments of the present invention. It should be understood that each flow and/or block in the flowchart and/or block diagrams as well as the combination of the flow and/or block in the flowchart and/or block diagram can be achieved through computer program commands Such computer program commands can be provided to general computers, special-purpose computers, embedded processors or any other processors of programmable data processing equipment so as to generate a machine, so that a device for realizing one or multiple flows in the flow diagram and/or the functions specified in one block or multiple blocks of the block diagram is generated by the commands to be executed by computers or any other processors of the programmable data processing equipment.

Such computer program commands can also be stored in readable memory of computers which can lead computers or other programmable data processing equipment to working in a specific style so that the commands stored in the readable memory of computers generate the product of command device; such command device can achieve one or multiple flows in the flowchart and/or the functions specified in one or multiple blocks of the block diagram.

Such computer program commands can also be loaded on computers or other programmable data processing equipment so as to carry out a series of operation steps on computers or other programmable equipment to generate the process to be achieved by computers, so that the commands to be executed by computers or other programmable equipment achieve the one or multiple flows in the flowchart and/or the functions specified in one block or multiple blocks of the block diagram.

Although preferred embodiments of this application are already described, once those skilled in the art understand basic creative concept, they can make additional modification and alteration for these embodiments. Therefore, the appended claims are intended to be interpreted as encompassing preferred embodiments and all the modifications and alterations within the scope of this application.

**Claims**

1. A knowledge extraction method, **characterized in** comprising the following steps:

   acquiring an initial sentence group, the initial sentence group including one or more sentences;
   expanding the initial sentence group, in which the length of the initial sentence group is compared with an expected length to determine the initial sentence group to be expanded according to the comparison result;
   extracting knowledge, in which the sentence group that is finally obtained after expansion is outputted to realize knowledge extraction.

2. The knowledge extraction method of claim 1, **characterized in that** the step of expanding the initial sentence group comprises:

   setting a weight threshold, in which the weight threshold is set for the initial sentence group according to the result of comparing the length of the initial sentence group with the expected length;
   expanding the sentence group, in which while expanding the initial sentence group weights of sentences to be expanded are compared with the weight threshold, and expanding the initial sentence group according to the comparison result.

3. The knowledge extraction method of claim 2, **characterized in that** the step of setting a weight threshold comprises:

   determining a comparison result F: determining the result F of comparing the length of an initial sentence group with the expected length, F = the expected length/(the length of the initial sentence group + a redundant value);
   determining a weight threshold: the weight threshold when F is greater than or equal to 1 ;and the weight threshold when F is less than 1.

4. The knowledge extraction method of claim 3, **characterized in that**,
   in the step of determining a weight threshold:

   when F is greater than or equal to 1, the weight threshold = (K/F)/G;
   when F is less than 1, the weight threshold = (K/F)*G;
   wherein, G is a threshold adjustment factor and G is a value greater than 1; K is a property weight density.

5. The knowledge extraction method of claim 4, **characterized in that**:

   the threshold adjustment factor G is in a range $5 \leq G \leq 30$.

6. The knowledge extraction method of any of claims 1 to 5, **characterized in** further comprising:

   determining a set of properties, the set of properties including N property parameters $\alpha_i$ and weights $v_i$ corresponding to the property parameters $\alpha_i$, wherein N is a positive integer, i is an integer and $1 \leq i \leq N$;
   acquiring a property weight density K using an equation $K = \sum v_i/N$.

7. The knowledge extraction method of any of claims 2 to 6, **characterized in that** the step of sentence group expansion further comprises:

   selecting an initial sentence group, in which an initial sentence group is selected for expansion;
   obtaining a weight of a left sentence and/or a weight of a right sentence, in which a weight $W_L$ of the left sentence and/or a weight $W_R$ of the right sentence adjacent to the initial sentence group is obtained according to property parameters $\alpha_i$ contained in a left sentence and/or a right sentence adjacent to the initial sentence group and corresponding weights $v_i$;
   left expanding and/or right expanding the initial sentence group, in which if the weight $W_L$ of the left sentence and/or the weight $W_R$ of the right sentence adjacent to the initial sentence group is greater than or equal to the weight threshold, the left sentence and/or the right sentence is expanded into the initial sentence group to form a new sentence group; otherwise, no expansion is performed on the initial sentence group;
   obtaining a final sentence group, in which the new sentence group is used as an initial sentence group and the step of obtaining a weight of a left sentence and/or a weight of a right sentence and the step of left expanding and/or right expanding the initial sentence groups are repeated until the initial sentence group cannot be expanded anymore, so as to obtain the final sentence group;

loop expansion, in which each initial sentence group is expanded through the step of selecting an initial sentence group to the step of obtaining a final sentence group, so as to obtain all final sentence groups.

**8.** The knowledge extraction method of any of claims 3 to 7, **characterized in that** in the step of determining the comparison result F:

in the case of left expansion of the initial sentence group, the redundant value is set to half of the length of the left sentence adjacent to the initial sentence group;

in the case of right expansion of the initial sentence group, the redundant value is set to half of the length of the right sentence adjacent to the initial sentence group.

**9.** The knowledge extraction method of claim 7 or claim 8, **characterized in that** the step of sentence group expansion further comprises:

setting a sentence number threshold for left and/or right expansion, in which the left-expansion sentence number threshold is L and the right-expansion sentence number threshold is R;

in the step of left expanding and/or right expanding the initial sentence group and the step of obtaining a final sentence group, when the number of sentences for left expansion of the initial sentence group is greater than the left-expansion sentence number threshold L, no left expansion is performed on the initial sentence group anymore; when the number of sentences for right expansion of the initial sentence group is greater than the right-expansion sentence number threshold R, no right expansion is performed on the initial sentence group anymore.

**10.** The knowledge extraction method of claim 9, **characterized in that**:

in the step of setting a sentence number threshold for left and/or right expansion, in the case of both left and right expansion of the initial sentence group, the left-expansion sentence number threshold L is set to 6 and the right-expansion sentence number threshold R is set to 6; in the case of only left expansion of the initial sentence group, the left-expansion sentence number threshold L is set to 12 and the right-expansion sentence number threshold R is set to 0; in the case of only right expansion of the initial sentence group, the left-expansion sentence number threshold L is set to 0 and the right-expansion sentence number threshold R is set to 12.

**11.** The knowledge extraction method of any of claims 7 to 10, **characterized in that**:

In the step of obtaining a weight of a left sentence and/or a weight of a right sentence,:

the weight $W_L$ is the sum of weights $v_i$ corresponding to all property parameters $\alpha_i$ contained in the left sentence adjacent to the initial sentence group;

the weight $W_R$ is the sum of weights $v_i$ corresponding to all property parameters $\alpha_i$ contained in the right sentence adjacent to the initial sentence group.

**12.** The knowledge extraction method of any of claims 1 to 11, **characterized in that**: the step of acquiring an initial sentence group comprises:

dividing text into sentences;

forming an initial sentence group by I consecutive sentences, wherein I is an integer greater than or equal to 1.

**13.** The knowledge extraction method of claim 12, **characterized in** I=3.

**14.** The knowledge extraction method of any of claims 1 to 13, **characterized in** further comprising:

acquiring a final sentence group weight, in which a final sentence group weight is obtained according to property parameters $\alpha_i$ contained in the final sentence group and corresponding weights $V_i$, the final sentence group weight being the sum of corresponding weights $V_i$ of all property parameters $\alpha_i$ contained in each sentence in the final sentence group;

acquiring a final sentence group weight density according to the final sentence group weight, in which a final sentence group weight density K' = the final sentence group weight/ the length of the final sentence group.

**15.** The knowledge extraction method of any of claims 1 to 14, **characterized in that** the step of extracting knowledge further comprises:

deduplicating and outputting the final sentence group, in which the final sentence group is deduplicated and then outputted.

**16.** The knowledge extraction method of any of claims 1 to 15, **characterized in that** the step of extracting knowledge further comprises:

removing and outputting the final sentence group, in which a minimum length is set for the final sentence group and the final sentence group having a length less than the minimum length is removed.

**17.** The knowledge extraction method of any of claims 1 to 16, **characterized in that** the step of extracting knowledge further comprises:

sorting and outputting the final sentence group, in which the final sentence group is sorted according to each weight density K' of the final sentence group and then outputted.

**18.** A knowledge extraction system, **characterized in** comprising:

an initial sentence group acquisition module (1) for acquiring an initial sentence group, the sentence group including one or more sentences;
an initial sentence group expansion module (2) for comparing the length of the initial sentence group obtained by the initial sentence group acquisition module (1) with an expected length to determine the initial sentence group to be expanded according to the comparison result;
a knowledge extraction module (3) for outputting a final sentence group that is finally obtained by the initial sentence group expansion module (2) to realize knowledge extraction.

**19.** The knowledge extraction system of claim 18, **characterized in that**:

the initial sentence group expansion module (2) comprises:

a weight threshold setting unit (21) for setting a weight threshold for the initial sentence group according to the result of comparing the length of the initial sentence grous with the expected length;
a sentence group expansion unit (22) for, in expansion of the initial sentence group, comparing weights of sentences to be expanded with the weight threshold, and expanding the initial sentence group according to the comparison result.

**20.** The knowledge extraction system of claim 19, **characterized in that**:

the weight threshold setting unit (21) comprises:

a comparison result determination subunit (211) for determining the result F of comparing the length of an initial sentence group with the expected length: F = the expected length/(the length of the initial sentence group + a redundant value);
a weight threshold determination subunit (212) for determining a weight threshold, a weight threshold when F is greater than or equal to 1, the weight threshold being less than a weight threshold when F is less than 1.

**21.** The knowledge extraction system of claim 20, **characterized in that**:

the weight threshold determination subunit (212) comprises:

a threshold adjustment factor setting device (212a) for setting and outputting a threshold adjustment factor G, wherein G is a value greater than 1;
a property weight density acquisition device (212b) for obtaining and outputting a property weight density K;
a weight threshold acquisition device (212c) for obtaining and outputting a weight threshold according to outputs of the threshold adjustment factor setting device (212a), the property weight density acquisition device (212b) and the comparison result determination unit (211); when F is greater than or equal to 1, the weight threshold = (K/F)/G; when F is less than 1, the weight threshold = (K/F)*G, wherein, G is a threshold adjustment factor and G is a value greater than 1; K is a property weight density.

22. The knowledge extraction system of claim 21, **characterized in that**:

the threshold adjustment factor setting device (212a) sets the threshold adjustment factor G in a range $5 \leq G \leq 30$.

23. The knowledge extraction system of any of claims 18-22, **characterized in** further comprising:

a property set module (4) for storing a set of properties including N property parameters $\alpha_i$ and weights $v_i$ corresponding to the property parameters $\alpha_i$, wherein N is a positive integer, i is an integer and $1 \leq i \leq N$; wherein the property weight density acquisition device (212b) obtains a property weight density K using an equation $K = \sum v_i / N$.

24. The knowledge extraction system of any of claims 19-23, **characterized in** further comprising:

the sentence group expansion unit (22) further comprises:

an initial sentence group selection subunit (221) for selecting an initial sentence group for expansion from the initial sentence group acquisition module 1;
a sentence weight acquisition subunit (222) for obtaining a weight $W_L$ of the left sentence and/or a weight $W_R$ of the right sentence adjacent to the initial sentence group according to property parameters $\alpha_i$ contained in a left sentence and/or a right sentence adjacent to the initial sentence group and corresponding weights $v_i$;
a comparison subunit (223) for comparing the weight $W_L$ of the left sentence and/or the weight $W_R$ of the right sentence adjacent to the initial sentence group with the weight threshold;
a new sentence group acquisition subunit (224) for, if the weight $W_L$ of the left sentence and/or the weight $W_R$ of the right sentence adjacent to the initial sentence group is greater than or equal to the weight threshold, expanding the left sentence and/or the right sentence into the initial sentence group to form a new sentence group and outputting it to the sentence weight acquisition subunit (222) as an initial sentence group, until no expansion is performed on the initial sentence group anymore, so as to obtain a final sentence group, the final sentence group being outputted to the knowledge extraction module (3);
a loop expansion subunit (225) for, after the new sentence group acquisition subunit (224) obtains a final sentence group, controlling the initial sentence group selection subunit (221) to select another initial sentence group for expansion from the initial sentence group acquisition module (1).

25. The knowledge extraction system of any of claims 20-24, **characterized in that** the comparison result determination unit (211) comprises:

a redundant value setting device (211a) for setting a redundant value, wherein in the case of left expansion of the initial sentence group, the redundant value is set to half of the length of the left sentence adjacent to the initial sentence group; in the case of right expansion of the initial sentence group, the redundant value is set to half of the length of the right sentence adjacent to the initial sentence group.

26. The knowledge extraction system of claim 24 or claim 25, **characterized in that** the sentence group expansion unit (22) further comprises:

a threshold setting subunit (226) for setting a left-expansion sentence number threshold L for the initial sentence group and/or a right-expansion sentence number threshold R for the initial sentence group;
a first counting subunit (227a) for counting and outputting a number of sentences that have been left expanded into the initial sentence group;
a second counting subunit (227b) for counting and outputting a number of sentences that have been right expanded into the initial sentence group; wherein
the comparison subunit (223) is further used for comparing the number of sentences that have been left expanded into the initial sentence group with the left-expansion sentence number threshold L, and comparing the number of sentences that have been right expanded into the initial sentence group with the right-expansion sentence number threshold R;
the new sentence group acquisition subunit (224) is further used for, if the number of sentences that have been left expanded into the initial sentence group is less than or equal to L and/or the number of sentences that have been right expanded into the initial sentence group is less than or equal to R, and if the weight $W_L$ of the left sentence and/or the weight $W_R$ of the right sentence adjacent to the initial sentence group are greater than or equal to the weight threshold, expanding the left sentence and/or the right sentence to the initial sentence group to form a new sentence group and outputting it to the sentence weight acquisition subunit (222) as an initial sentence group, until no expansion is performed on the initial sentence group anymore, so as to obtain a final sentence group, the final sentence group being outputted to the knowledge extraction module (3).

**27.** The knowledge extraction system of claim 26, **characterized in that**:

in the case of both left and right expanding the initial sentence group, the threshold setting subunit (226) sets the left-expansion sentence number threshold L to 6 and sets the right-expansion sentence number threshold R to 6; in the case of only left expanding the initial sentence group, sets the left-expansion sentence number threshold L to 12 and sets the right-expansion sentence number threshold R to 0; in the case of only right expanding the initial sentence group, sets the left-expansion sentence number threshold L to 0 and sets the right-expansion sentence number threshold R to 12.

**28.** The knowledge extraction system of any of claims 24-27, **characterized in that** the sentence weight acquisition subunit (222) comprises:

a first weight acquisition device (222a) for adding weights $v_i$ corresponding to all property parameters $\alpha_i$ contained in the left sentence adjacent to the initial sentence group together to obtain a weight $W_L$ of the left sentence; a second weight acquisition device (222b) for adding weights $v_i$ corresponding to all property parameters $\alpha_i$ contained in the right sentence adjacent to the initial sentence group together to obtain a weight $W_R$ of the right sentence.

**29.** The knowledge extraction system of any of claims 18-28, **characterized in that** the initial sentence group acquisition module (1) comprises:

a sentence dividing unit (11) for dividing a document into sentences; an extraction unit (12) for constructing the initial sentence group with I consecutive sentences, wherein I is an integer larger than or equal to 1.

**30.** The knowledge extraction system of claim 29, **characterized in that** the extraction unit (12) constructs the initial sentence group with 3 consecutive sentences.

**31.** The knowledge extraction system of any of claims 24-30, **characterized in that** the sentence group expansion unit (22) further comprises:

a sentence group weight acquisition subunit (228a) for acquiring a final sentence group weight according to property parameters $\alpha_i$ contained in the final sentence group and corresponding weights $V_i$, the final sentence group weight being the sum of corresponding weights $V_i$ of all property parameters $\alpha_i$ contained in each sentence in the final sentence group; a sentence group length acquisition subunit (228b) for obtaining a length of the final sentence group; a weight density acquisition subunit (228c) for acquiring a final sentence group weight density according to the final sentence group weight, in which the final sentence group weight density K' = the final sentence group weight/ the length of the final sentence group.

**32.** The knowledge extraction system of any of claims 18-31, **characterized in that** the knowledge extraction module (3) comprises:

a final sentence group deduplicating and outputting unit (31) for deduplicating the final sentence group and then outputting the final sentence group.

**33.** The knowledge extraction system of any of claims 18-32, **characterized in that** the knowledge extraction module (3) further comprises:

a final sentence group removing and outputting unit (32) for setting a minimum length for the final sentence group and outputting the final sentence group after removing those final sentence groups having a length less than the minimum length.

**34.** The knowledge extraction system of any of claims 18-33, **characterized in that** the knowledge extraction module (3) further comprises:

a final sentence group sorting and outputting unit (33) for sorting and outputting final sentence groups, in which final sentence groups are sorted and then outputted according to the weight density K' of each final sentence group.

**35.** One or more computer readable mediums having stored thereon computer-executable instructions that when executed by a computer perform a knowledge extraction method, the method comprising:

acquiring an initial sentence group, the initial sentence group including one or more sentences;
expanding the initial sentence group in which the length of the initial sentence group is compared with an expected length to determine an initial sentence group to be expanded according to the comparison result;
extracting knowledge in which a final sentence group that is finally obtained after expansion is outputted to realize knowledge extraction.

S102

acquiring an initial sentence group, the initial sentence group including one or more sentences

S104

expanding the initial sentence group, comparing the length of the initial sentence group with an expected length to determine the initial sentence group to be expanded according to the comparison result

S106

extracting knowledge, in which the sentence groups that are finally obtained after expansion are outputted to realize knowledge extraction

Fig.1

start

determining a set of properties, the set of properties including N property parameters $a_i$ and weights $V_i$ corresponding to the property parameters $a_i$, wherein N is a positive integer, i is an integer and $1 \leqslant i \leqslant N$ — S201

acquiring a property weight density K using an equation $K = \sum V_i / N$ — S202

setting a threshold adjustment factor G, wherein G is a value greater than 1 — S203

determining the result F of comparing the length of an initial sentence group with the expected length, F = the expected length/(the length of the initial sentence group + a redundant value) — S204

If F is greater than or equal to 1, the weight threshold $= (K/F)/G$; If F is less than 1, the weight threshold $= (K/F) * G$ — S205

setting a left-expansion sentence number threshold L — S206

selecting an initial sentence group for expansion — S207

left expansion? — S208

YES

setting the redundant value half of the length of the left sentence adjacent to the initial sentence group — S209

A weight $W_L$ Of tHe left sentence adjacent to the initial sentence group is obtained through adding weights Vi corresponding property parameters $a_i$ contained in a left sentence adjacent to the initial sentence group together — S210

$W_L$ is greater than weight threshold? — S211

NO

YES

the number of left sentences that have been expanded into the initial sentence group is greater than L? — S212

YES

NO

expanding the left sentence into the initial sentence group to form a new sentence group — S213

using the new sentence group as an initial sentence group — S214

END

Fig.2

text document → initial sentence group acquisition module 1 → initial sentence group expansion module 2 → knowledge extraction module 3 →

Fig.3

knowledge extraction system

weight threshold setting unit 21

weight threshold determination subunit 212

threshold adjustment factor setting device 212a

weight threshold acquisition device 212c

comparison result determination subunit 211

redundant value setting device 211a

property set module 4

property weight density acquisition device 212b

text document

Initial sentence group acquisition module 1

sentence dividing unit 11

extraction unit 12

threshold setting subunit 226

comparison subunit 223

first counting subunit 227

second counting subunit 227b

initial sentence group selection subunit 221

first weight acquisition device 222a

second weight acquisition device 222b

sentence weight acquisition subunit 222

new sentence group acquisition subunit 224

loop expansion subunit 225

sentence group weight acquisition subunit 228a

weight density acquisition subunit 228c

sentence group length acquisition subunit 228b

final sentence group deduplicating and outputting unit 31

final sentence group removing and outputting unit 32

final sentence group sorting and outputting unit 33

knowledge extraction module 3

sentence group expansion unit 22

initial sentence group expansion module 2

final sentence group

Fig.4

24

# INTERNATIONAL SEARCH REPORT

| International application No. |
| --- |
| **PCT/CN2013/088777** |

## A. CLASSIFICATION OF SUBJECT MATTER

G06F 17/30 (2006.01) i

According to International Patent Classification (IPC) or to both national classification and IPC

## B. FIELDS SEARCHED

Minimum documentation searched (classification system followed by classification symbols)

G06F 17/-

Documentation searched other than minimum documentation to the extent that such documents are included in the fields searched

Electronic data base consulted during the international search (name of data base and, where practicable, search terms used)

CNTXT, CNKI, DWPI, EPOQUE: sentence group, phrasing, sentence, length, compare, obtain, expand, extract, knowledge, weight, threshold, left, right, dispart

## C. DOCUMENTS CONSIDERED TO BE RELEVANT

| Category* | Citation of document, with indication, where appropriate, of the relevant passages | Relevant to claim No. |
| --- | --- | --- |
| Y | CN 102693219 A (SOOCHOW UNIVERSITY), 26 September 2012 (26.09.2012), claims 1-2 | 1, 12, 13, 15-18, 29, 30, 32-34, 35 |
| A | CN 102693219 A (SOOCHOW UNIVERSITY), 26 September 2012 (26.09.2012), the whole document | 2-11, 14, 19-28, 31 |
| Y | ZHANG, Yan et al., "Aligning Sentences in Chinese-English Corpora with Extended Length-based Approach", JOURNAL OF CHINESE INFORMATION PROCESSING, volume 5, number 19, 10 May 2005 (10.05.2005), page 31 | 1, 12, 13, 15-18, 29, 30, 32-34, 35 |
| A | ZHANG, Yan et al., "Aligning Sentences in Chinese-English Corpora with Extended Length-based Approach", JOURNAL OF CHINESE INFORMATION PROCESSING, volume 5, number 19, 10 May 2005 (10.05.2005), page 31 | 2-11, 14, 19-28, 31 |
| A | CN 101013421 A (TSINGHUA UNIVERSITY), 08 August 2007 (08.08.2007), the whole document | 1-35 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 June 2014 (20.06.2014) | **09 July 2014 (09.07.2014)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LI, Xiaoqing**<br><br>Telephone No.: (86-10) **62411891** |

Form PCT/ISA/210 (second sheet) (July 2009)

## INTERNATIONAL SEARCH REPORT
### Information on patent family members

International application No.

**PCT/CN2013/088777**

| Patent Documents referred in the Report | Publication Date | Patent Family | Publication Date |
|---|---|---|---|
| CN 102693219 A | 26 September 2012 | None | |
| CN 101013421 A | 08 August 2007 | CN 101013421 B | 27 June 2012 |

Form PCT/ISA/210 (patent family annex) (July 2009)